# EUROPEAN PATENT APPLICATION

(11) **EP 1 189 081 A2**
(43) Date of publication of application: **20.03.2002**
(21) Application number: 01117019.8
(22) Date of filing: 12.07.2001
(51) Int. Cl.: G02B 6/13

(54) **Optical waveguide and manufacturing method thereof**

(30) Priority: 13.07.2000 JP 2000213441
(71) Applicant: Junkosha, Inc., Kasama-shi, Obaraki-ken 309-1603 (JP)
(72) Inventor: Haruo, Imaizumi, Kofu, Yamanashi 400-0053 (JP)
(74) Representative: Klunker . Schmitt-Nilson . Hirsch

(57) **Abstract**

An optical waveguide, comprising a cladding around a core, wherein this optical waveguide is configured such that an adhesive layer is interposed between the core and the cladding; as well as a method for manufacturing an optical waveguide comprising a core and a cladding, wherein this method for manufacturing an optical waveguide comprises forming a core film and a first cladding layer with a core groove, embedding the core film into the groove of the first cladding layer, forming an adhesive film, providing a second cladding layer for forming an integrally bonded structure containing the first cladding layer, and bonding the first and second cladding layers together through the agency of the adhesive film. This invention provides an optical waveguide whose transmission loss does not depend on wavelength in the optical communications waveband of 0.6-1.55 µm, wherein this optical waveguide had adequate adhesion strength between cladding layers or the like and possesses high peel strength; and to provide a manufacturing method that allows an optical waveguide devoid of cladding layer cracking or core shifting to be obtained with ease.

## Description

### FIELD OF THE INVENTION

The present invention relates to an optical waveguide that can be used as the internal inter-equipment wiring, printed board internal wiring, optoelectronic integrated circuit, or other component of optical communications equipment for transmitting optical signals, and to a method for manufacturing such a waveguide; and more particularly to an optical waveguide configured such that the core and cladding of the optical waveguide are fashioned from an amorphous fluororesin, and to a method for manufacturing such a waveguide.

### BACKGROUND OF THE INVENTION

With the current development of advanced information exchange devices, optical fiber networks have gained wide acceptance as the trunk lines of communications systems, and high-speed, high-volume transmissions have already been implemented. Designing inexpensive, easily usable optical components is indispensable for performing high-speed, high-volume transmissions on a wider scale through such optical fiber networks, and a need exists for creating optical waveguides that have adequate optical transmission characteristics and can accommodate such optical components in densely mounted arrangements. In conventional practice, such optical waveguides have a core and a cladding, and inorganic quartz have primarily been contemplated as a material for such waveguides because of considerations related to low optical transmission loss, the ability to control the refractive index difference of the core and the cladding, excellent heat resistance, and the like. However, using quartz to produce an optical waveguide having a core and a cladding not only involves performing complex steps but also necessitates performing high-temperature treatments and creates production-related problems.

By contrast, polymer materials, which are easy to produce and do not require the high-temperature heat treatments commonly needed for quartz or the like, can also be used for optical waveguides. For example, optical waveguides whose core is obtained using the organic polymer material polymethacrylate (PMMA) are widely used because they can be molded at a low temperature, have excellent workability, are easy to handle, and have other advantages, but an optical waveguide whose core is obtained using such polymethacrylate loses a substantial amount of light through absorption in the wavelength range used for optical transmissions (0.6-1.55 µm; for example, 8.8 µm or greater), making it impossible to bring optical transmission loss to a sufficiently low level.

Attempts have therefore been made to reduce the optical transmission loss in the aforementioned specific wavelength range of optical transmission by designing optical waveguides composed of a fluorinated PMMA material exposed to electron beams (JP (Kokai) 7-92338), or optical waveguides composed of fluorinated polyimides having excellent heat resistance (JP (Kokai) 4-235505). A drawback of such optical waveguides, however, is that light is still lost through absorption in the 1.55-µm waveband and that efforts still need to be made to achieve a sufficient reduction in transmission loss within this optical communication band.

An optical waveguide whose core is obtained using an amorphous fluororesin with low optical transmission loss has therefore been proposed (JP (Kokai) 4-190292) in order to achieve an adequate reduction in optical transmission loss within the aforementioned optical transmission waveband (0.6-1.55 µm), and it was found that an optical waveguide with an amorphous fluororesin core does indeed have excellent light transmission in the 1.55-µm waveband. Such an optical waveguide, however, does not have any cladding and is obtained merely by placing the core on a silicon wafer. The absence of a cladding causes dust to adhere to the core, and the resulting deposit has a profoundly adverse effect on optical transmission characteristics and makes the waveguide less suitable for practical use.

It has been proposed to overcome this shortcoming by employing an optical waveguide whose core is composed of an amorphous fluororesin, and configuring this optical waveguide such that its core is covered by a cladding (JP (Kokai) 10-227931). This optical waveguide is obtained by a method in which an amorphous fluororesin solution obtained using a specific fluorocarbon solvent is spin-coated onto a ceramic substrate or silicon wafer, the coated substrate or wafer is dried to fashion the amorphous fluororesin into a lower cladding layer, this lower cladding layer is coated with the same amorphous fluororesin solution obtained using a specific fluorocarbon solvent, the coated layer is dried to form a core layer, the core layer is coated with the same amorphous fluororesin solution obtained using a specific fluorocarbon solvent, and the coated layer is dried to form an upper cladding layer. However, the optical waveguide thus formed develops the following problems when the lower cladding layer, core layer, and upper cladding layer are formed during manufacturing, and particularly when the aforementioned amorphous fluororesin solution is applied by spin coating to the lower cladding layer in order to form a core layer or upper cladding layer on the lower cladding layer.

Specifically, the lower cladding layer is dissolved by the fluorocarbon solvent of the amorphous fluororesin solution used for the core layer or upper cladding layer between the already formed lower cladding layer of the amorphous fluororesin and the amorphous fluororesin solution subsequently applied as a core layer or upper cladding layer, making it extremely difficult to fabricate adequate optical waveguides with good accuracy and reproducibility because of the fact that stress release, swelling, and mixing occur; the lower cladding layer develops cracks; the core shifts away from its prescribed formation position; and the like.

Another drawback is that when an amorphous fluororesin solution obtained by dissolving the aforementioned specific fluorocarbon solvent is used to form the amorphous fluororesin as a lower cladding layer on a ceramic substrate or silicon wafer, the amorphous fluororesin adheres extremely poorly to the ceramic substrate or silicon wafer, and the lower cladding layer tends to peel off from the ceramic substrate or silicon wafer, yielding inadequate adhesive strength or peel strength.

### SUMMARY OF THE INVENTION

An object of the present invention, which was perfected in view of the aforementioned problems, is to provide an amorphous fluororesin optical waveguide that has excellent heat resistance, improved water resistance, low optical absorption loss, and no dependence of transmission loss on wavelength in the waveband (0.6-1.55 µm) used for optical communications, wherein this amorphous fluororesin optical waveguide resists peeling and has adequate adhesive strength between the lower cladding layer formed on a substrate (such as a ceramic substrate or silicon wafer) and the substrate itself, or between the lower cladding layer and an upper cladding layer; and to provide a method for manufacturing an amorphous fluororesin optical waveguide with good reproducibility and high accuracy such that the optical waveguide is easy to manufacture, the cladding layer is devoid of cracks, and the core remains in place after being formed at a prescribed location.

The invention provides an optical waveguide, having a lower cladding layer having grooves formed therein; a core disposed within the grooves; an adhesive layer disposed over the lower cladding layer and the core; and an upper cladding layer disposed over the adhesive layer. The lower cladding layer, the core, the adhesive layer, and the upper cladding layer are preferably made of an amorphous fluororesin. The lower cladding layer is preferably Teflon AF-1600. The core is preferably Cytop CTL-809S. The adhesive layer is preferably Teflon AF-1600 and a perfluoropolyether fluorine oil. The upper cladding layer is preferably Teflon AF-1600. The invention also provides a substrate adjacent to the lower cladding with another adhesive layer disposed between the lower cladding layer and the substrate. The substrate is preferably a silicon wafer. The other adhesive layer is preferably Cytop CTL-809M.

This invention also provides a method of making an optical waveguide by the steps of
(a) providing a substrate;
(b) forming a lower adhesive layer over the substrate;
(c) forming a lower cladding layer over the lower adhesive layer;
(d) forming grooves in the lower cladding layer;
(e) forming a core in the grooves;
(f) forming an upper adhesive layer over the core and the lower cladding layer; and
(g) forming an upper cladding layer over the upper adhesive layer.

### BRIEF DESCRIPTION OF THE DRAWINGS

Figure 1 is a cross-sectional view depicting an optical waveguide according to one embodiment of present invention.

Figures 2(1) to 2(6) are schematic drawings depicting the production sequence of the optical waveguide shown in Fig. 1.

Figures 3(1) to 3(3) are schematic drawings depicting the production sequence of an optical waveguide according to another embodiment of the present invention.

Figures 4(1) to 4(3) are schematic drawings depicting the production sequence of an optical waveguide according to another embodiment of the present invention.

Figure 5 is a diagram illustrating a laminated optical waveguide according to another embodiment of the present invention.

### DETAILED DESCRIPTION OF THE INVENTION

The stated object is attained by the inventive optical waveguide and manufacturing method. Specifically, the present invention primarily resides in an optical waveguide that comprises a cladding around a core, wherein this optical waveguide is configured such that an adhesive layer is interposed between the core and the cladding, and also in a method for manufacturing an optical waveguide by forming a first cladding layer with a core groove, providing a core film, embedding the core film into the groove of the first cladding layer, forming an adhesive film, providing a second cladding layer for forming an integrally bonded structure containing the first cladding layer, and bonding the first and second cladding layers together through the agency of the adhesive film.

### EXAMPLES

The present invention will now be described through working examples with reference to the accompanying drawings.

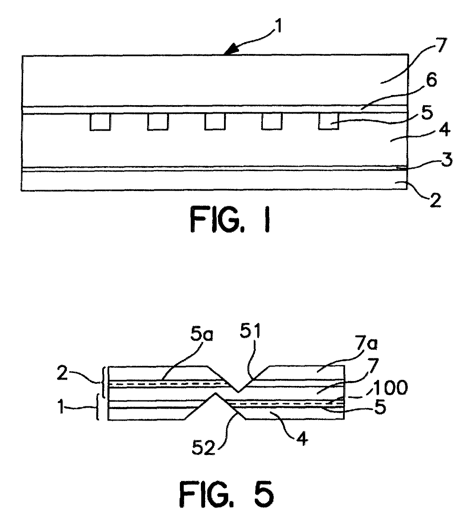

In Fig. 1 depicts an amorphous fluororesin optical waveguide 1 fashioned in accordance with the present invention. The optical waveguide 1 may, for example, comprise a substrate 2 in the form of a silicon wafer. An amorphous fluororesin lower cladding layer 4 (first cladding layer) composed of Teflon AF1600 (manufactured by Du Pont) is formed on the substrate 2 via an interposed lower adhesive layer 3 (Cytop CTL-809M, manufactured by Asahi Glass), which is based on the amorphous fluororesin described in detail below. An amorphous fluororesin core layer 5 composed of Cytop (CTL-809S, manufactured by Asahi Glass) is formed on the lower cladding layer 4, and an amorphous fluororesin upper cladding layer 7 (second cladding layer) composed of Teflon AF1600 (manufactured by Du Pont) is formed in the same manner on the core layer 5 via an interposed amorphous fluororesin upper adhesive layer 6 (Teflon AF160 containing fluorine ions, such as Krytox GPL-107 from Du Pont), which is based on the amorphous fluororesin described in detail below.

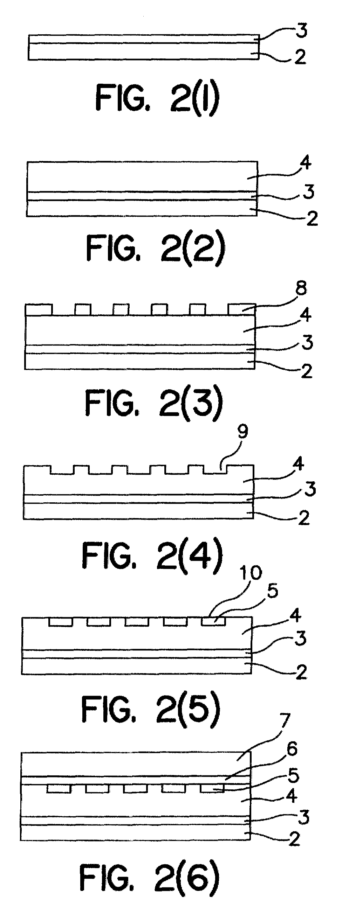

A method for manufacturing the inventive amorphous fluororesin optical waveguide thus configured will now be described with reference to Fig. 2.

To manufacture an amorphous fluororesin optical waveguide 1 in accordance with the present invention, a 9-wt% amorphous fluororesin solution (Cytop CTL-809M from Asahi Glass) is applied, for example, by spin coating to a substrate 2 shaped, for example, as a silicon wafer with a diameter of about 10 cm and a thickness of about 0.5 mm, as shown in Fig. 2; and the coated substrate is heated to remove the solvent, yielding a highly adhesive lower adhesive layer 3 with a thickness of about 0.1 µm on the substrate 2 (see Fig. 2(1)). In this case, the arrangement in which an amorphous fluororesin solution is applied by spin coating to the substrate 2 to form a lower adhesive layer 3 can be replaced with an arrangement in which a film shaped as a very thin disk is fabricated in advance as an adhesive layer in a separate step, and this film is mounted on the substrate 2 and used as an adhesive layer.

A round film with a diameter of about 10 cm and a thickness of about 80 µm (fabricated in advance by coating, casting, or the like in a separate step) is subsequently mounted on the lower adhesive layer 3 as a lower cladding layer 4. The lower cladding layer 4 is sufficiently thick to function as the lower cladding layer 4 of an optical waveguide when provided with a groove for the below-described core layer (see Fig. 2(2)). The film 4 used herein can be obtained by a method in which an amorphous fluororesin solution obtained by dissolving an amorphous fluororesin (Teflon AF-1600 from Du Pont; refractive index: 1.31) in a fluorocarbon solvent (Fluorinert FC-43 from 3M) in a concentration of 8 wt% is applied by spin coating in a prescribed thickness (for example, 1 mm) to a separately prepared film-manufacturing plate such as a silicon wafer (not shown); the film-manufacturing plate (not shown) coated with the amorphous fluororesin solution is introduced into a clean oven (not shown) and heated (under heating conditions corresponding to stepped heating in which the plate is kept at about 100°C for 1.5 hours, the temperature is then raised from 100°C to 160°C over a period of 8 hours, the plate is kept at 160°C for 3 hours, the system is further heated at a constant rate from 160°C to 300°C over a period of 3 hours, and the plate is kept at 300°C for 1 hour); the system is then allowed to cool naturally to room temperature; the fluorocarbon solvent is removed; the plate is immersed in an IPA (isopropyl alcohol) solution; and the coating is peeled off from the film-manufacturing plate (not shown). Residual stress can thus be removed from the resulting film. In preferred practice, the amorphous fluororesin solution is applied while rims for preventing the solution from flowing are provided around the film-manufacturing plate (not shown) in order to prevent the amorphous fluororesin solution from flowing during the application of the amorphous fluororesin solution to the film-manufacturing plate (not shown).

The lower cladding layer 4 in the form of a round film is thus mounted on the lower adhesive layer 3, and the lower cladding layer 4 is securely bonded to the substrate 2 via the lower adhesive layer 3 by a heat fusion technique in which the system is gradually heated while kept at a reduced pressure (for example, a pressure of 0.38 kg/cm² is applied) with the aid of a vacuum press, a temperature of 206°C is maintained for 1 minute, and the system is allowed to cool naturally to room temperature. In the process, the lower cladding layer 4 shaped as a film is mounted on and bonded to the lower adhesive layer 3, making it possible to prevent stress release, swelling, mixing, or contamination from occurring between the lower adhesive layer 3 and the lower cladding layer 4 in the manner observed when a conventional amorphous fluororesin solution is used.

The surface of the lower cladding layer 4 bonded to the substrate 2 in this manner is subjected to reactive ion etching (hereinafter referred to as "RIE"), and the surface of the lower cladding layer 4 is thus modified. The etching is carried out such that oxygen is fed to the RIE apparatus at a rate of 200 sqm, the pressure inside the RIE apparatus is kept at 45 pascal, power is supplied to the RIE apparatus in an amount of 200 W, and the process is continued for 30 seconds.

A resist 8 (positive resist OFPR-8600 from Tokyo Ohka) is applied by speed coating to the surface of the lower cladding layer 4 modified by RIE, and the coated layer is pre-baked for 40 minutes at 80°C. A negative mask pattern prepared in advance is subsequently applied to the surface of the lower cladding layer 4, and the layer is exposed using an exposure apparatus, developed with a developing solution, thoroughly washed, dried, and post-baked for 40 minutes at 120°C, forming a pattern on the resist 8 (see Fig. 2(3)).

The lower cladding layer 4 is then dry-etched in accordance with the pattern (formed by the resist 8 on the lower cladding layer 4) to a prescribed width (for example, 50 µm) and depth (for example, 8 µm) with the aid of an RIE apparatus, yielding a groove 9 for the aforementioned core layer. The etching is carried out such that oxygen is fed to the RIE apparatus at a rate of 10 sqm, carbon tetrafluoride is fed at a rate of 20 sqm, argon is fed at a rate of 90 sqm, the pressure inside the RIE apparatus is kept at 45 pascal, power is supplied to the RIE apparatus in an amount of 200 W, and the process is continued for 20 minutes. A lower cladding layer 4 whose surface is provided with a patterned groove 9 is obtained when the resist 8 is peeled off after the substrate 2 in which the groove 9 is formed in the lower cladding layer 4 in this manner is dipped in a resist release solution heated to 100°C (see Fig. 2(4)).

An amorphous fluororesin film 10 designed for the core, shaped as a thin Cytop (CTL-809S from Asahi Glass) disk with a diameter of about 10 cm and a thickness of 6 µm, and prepared in advance by hot pressing, film casting, or another special technique is subsequently placed over the lower cladding layer 4 provided with the groove 9, and the core film 10 is melted and allowed to fill the entire groove 9 when, for example, a pressure of 0.38 kg/cm² is applied for 2.5 hours at 120°C with the aid of a vacuum press in a reduced-pressure environment through the agency of a flat pressure member made of metal (not shown) and placed on the layer. The assembly is then cooled to room temperature, and the excess core film 10 remaining on the surface of the lower cladding layer 4 is removed using an RIE apparatus. The process is performed under the same RIE conditions as those established when the groove 9 is formed in the lower cladding layer 4, and the etching time is adjusted depending on the excess core film. A patterned core 5 is thus formed on the lower cladding layer 4 (Fig. 2(5)).

The aforementioned core film 10 can be obtained in the same manner as the film for the lower cladding layer 4 by a method in which an amorphous fluororesin (Cytop CTL-809S from Asahi Glass; refractive index: 1.34) is applied by spin coating in a prescribed thickness to a separately prepared film-manufacturing plate such as a silicon wafer (not shown); the film-manufacturing plate (not shown) coated with the amorphous fluororesin solution is introduced into a clean oven (not shown) and heated (under heating conditions corresponding to stepped heating in which the plate is kept at 100°C for 0.5 hour, the temperature is then raised from 100°C to 300°C over a period of 45 minutes, and the plate is kept at 300°C for 30 minutes), the system is then allowed to cool naturally to room temperature; the solvent is removed; the plate is immersed in an IPA (isopropyl alcohol) solution; and the coating is peeled off from the film-manufacturing plate (not shown). Residual stress can thus be removed from the resulting film. In preferred practice, the amorphous fluororesin solution is applied while rims for preventing the solution from flowing are provided around the film-manufacturing plate (not shown) in order to prevent the amorphous fluororesin solution from flowing during the application of the amorphous fluororesin solution to the film-manufacturing plate (not shown).

A film shaped as a thin disk with a diameter of about 10 cm and a thickness of about 6 µm and prepared in advance by hot pressing, film casting, or another special technique is subsequently placed as an upper adhesive layer 6 on the lower cladding layer 4 provided with the core 5. The film is obtained by a method in which an amorphous fluororesin solution is prepared by adding a perfluoropolyether fluorine oil such as Krytox (Krytox GPL-107 from Du Pont) in an amount of 8.5 wt% to an 8-wt% solution resulting from the dissolution of an amorphous fluororesin (Teflon AF-1600 from Du Pont, refractive index: 1.31) in a fluorocarbon solvent (Fluorinert FC-43 from 3M), the resulting amorphous fluororesin solution containing Krytox GPL-107 is applied by spin coating to a film-manufacturing plate in the form of a silicon wafer with a diameter of about 10 cm, the solvent is dried off, the coated plate is immersed in an IPA (isopropyl alcohol) solution, and the coating is peeled off from the film-manufacturing plate (not shown). Adding the perfluoropolyether fluorine oil allows the glass transition point of the amorphous fluororesin constituting the film to be reduced by about 20 degrees.

An amorphous fluororesin film (diameter: about 10 cm; thickness: 80 µm) prepared in advance in a separate step under the same conditions as those established during the formation of the film for the lower cladding layer 4 is subsequently placed as an upper cladding layer 7 on the upper adhesive layer 6. The upper cladding layer 7 in the form of a round film is thus mounted on the upper adhesive layer 6, and the upper cladding layer 7 is securely and easily bonded to the lower cladding layer 4 via the upper adhesive layer 6 by a fusion technique in which the system is gradually heated from room temperature while kept at a reduced pressure (for example, a pressure of 0.38 kg/cm² is applied) with the aid of a vacuum press, the conditions are kept unchanged once the temperature reaches 166°C, and the system is then allowed to cool naturally to room temperature. This process makes it possible to prevent swelling, mixing, or contamination from affecting the lower cladding layer in the manner observed when a solution is applied in order to form an upper cladding layer on a conventional lower cladding layer.

The bonding process is performed using an upper adhesive layer 6, which is obtained by a method in which the glass transition point of the amorphous fluororesin constituting the upper adhesive layer 6 is kept about 20 degrees below that of the lower cladding layer 4 and upper cladding layer 7 by the addition of fluorine oil to the upper adhesive layer 6 in the form of a film in the above-described manner, and the upper cladding layer 7 is bonded to the lower cladding layer 4 through the agency of the upper adhesive layer 6 to which the fluorine oil has been added, dispensing with the need to maintain a significantly higher temperature and making it possible to easily bond the upper cladding layer 7 and the lower cladding layer 4 when the upper cladding layer 7 is bonded to the lower cladding layer 4. Consequently, the upper cladding layer 7 and the lower cladding layer 4 can be bonded with ease while the core 5 is prevented from being melted or otherwise adversely affected by a temperature increase, taking into account that, in comparison with the lower cladding layer 4 or upper cladding layer 7, the core 5 is melted more easily by the increased temperature established during bonding. As a result, a highly accurate, completely embedded amorphous fluororesin optical waveguide can be obtained while the lower cladding layer 4 is prevented from cracking, swelling, or mixing, and the core 5 of the groove 9 in the lower cladding layer 4 is prevented from shifting because the core 5 (which is embedded in the groove 9 formed at a prescribed location of the lower cladding layer 4) is held inside the groove 9 even in the case of partial melting, for example (Fig. 2(6)).

Thus, using an upper adhesive layer 6 to which fluorine oil has been added allows the upper cladding layer 7 to be easily bonded to the lower cladding layer 4 while the lower cladding layer 4 is prevented from swelling, mixing, core shifting, or the like.

In comparison with the material constituting the core 5, the material constituting the upper cladding layer 7 and the lower cladding layer 4 is more difficult to melt and has greater heat resistance against the temperature increases effected during bonding when the upper cladding layer 7 is heated and bonded to the lower cladding layer 4; and the groove 9 of the lower cladding layer 4 preserves the shape of the core 5 during such heating and bonding when, for example, the core 5 is partially melted.

The optical waveguide thus produced was cut with a dicing apparatus to obtain an optical-waveguide end face with a width of 50 µm, a thickness of 8 µm, and a length of 40 mm; white light was shone; outgoing radiation was observed under an optical microscope; and it was found that light was confined inside the core 5. Transmission loss (including continuous loss) was also measured by a cutback technique, and it was found that the resulting optical waveguide 1 had excellent optical characteristics and a negligible dependence on wavelength (0.043 dB/cm at a wavelength of 850 nm, 0.046 dB/cm at a wavelength of 1300 nm, and 1.00 dB/cm at a wavelength of 1500 nm).

Although the above working example was described with reference to a structure in which the lower cladding layer was directly etched when a core groove was formed in the lower cladding layer, the present invention can also be used to manufacture an amorphous fluororesin optical waveguide by forming a core groove in the lower cladding layer with the aid of a casting system.

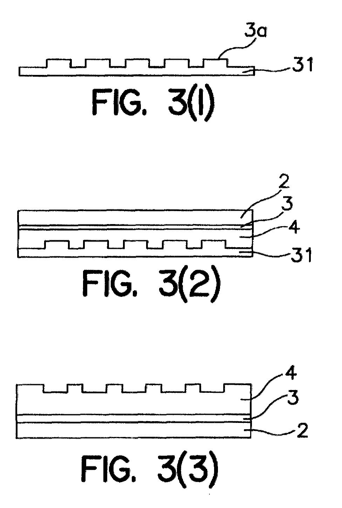

Specifically, the amorphous fluororesin optical waveguide of the present invention can be produced by a method in which, for example, a silicon wafer having specially patterned ribs 3a is used as a mold 31 (Fig. 3(1)) to form a lower cladding layer 4 (as shown, for example, in Fig. 3); rims are placed around the mold 31; the amorphous fluororesin solution used for the formation of the lower cladding layer 4 in the above-described working example is poured into the mold 31; the solution in the mold is heated and dried; the lower cladding layer 4 is formed such that the ribs 3a of the mold 31 form the core groove 9 of the lower cladding layer 4; and the core groove 9 is transferred from the mold 31 to the lower cladding layer 4. The reason rims are provided around the aforementioned mold is to prevent the amorphous fluororesin solution from flowing when the amorphous fluororesin solution is poured into the mold 31, and to form a lower cladding layer 4 of prescribed thickness. With the lower cladding layer 4, the technical scope of the present invention also includes arrangements in which a pre-molded amorphous fluororesin film is placed on a silicon-wafer mold 31 and pressed under heating, yielding a lower cladding layer 4.

An adhesive layer 3 identical to the lower adhesive layer 3 of the above working example is used to place the substrate 2 (silicon wafer) on the opposite side from the lower cladding layer 4 (which is provided with the core groove 9 in the above-described manner), the system is gradually heated from room temperature while kept at a reduced pressure (for example, a pressure of 0.38 kg/cm² is applied) with the aid of a vacuum press, a temperature of 206°C is maintained for 1 minute, the system is then allowed to cool naturally to room temperature, and the lower cladding layer 4 is bonded to the substrate 2 (Fig. 3(2)). The lower cladding layer 4 bonded to the substrate 2 by means of the adhesive layer 3 is then peeled off from the silicon-wafer mold 31, making it possible to obtain a lower cladding layer 4 having a patterned groove 9 (Fig. 3(3)). The subsequent procedure is similar to the one performed in the above-described working example. In other words, the core 5 is formed by embedding the amorphous fluororesin film 10 for the core in the groove 9 of the resulting lower cladding layer 4 with the aid of a heat press or the like, excess core film is then removed, and an upper cladding layer 7 is then provided via an interlying upper adhesive layer 6, yielding an optical waveguide composed of an amorphous fluororesin. An optical waveguide composed of an amorphous fluororesin can thus be formed using a mold such as a silicon wafer.

Flexible amorphous fluororesin optical waveguides can be produced by the present invention in addition to the waveguides described with reference to the above working examples.

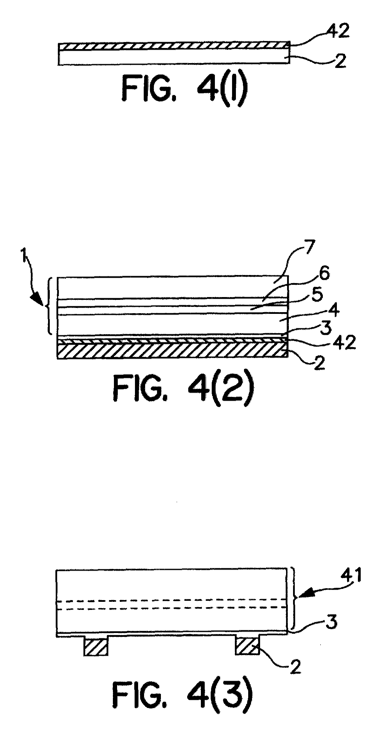

Specifically, as shown in Fig. 4, a flexible amorphous fluororesin optical waveguide 41 can be obtained in accordance with the present invention by a method in which aluminum is vapor-deposited in a thickness of about 50 nm by a vacuum vapor deposition apparatus on one side of the substrate 2 (silicon wafer) used in the above-described working example, yielding a dummy layer 42 over the portion formed by the vapor deposition of aluminum (Fig. 4(1)); and an optical waveguide 41 composed of an amorphous fluororesin is formed on the dummy layer 42 in the same manner as in the case of the substrate 2 pertaining to the above working example. Specifically, a lower adhesive layer 3 is formed on the dummy layer 42, a lower cladding layer 4 is formed thereon, a patterned groove 9 is formed in the lower cladding layer 4, the amorphous fluororesin film 10 for the core is then embedded in the groove 9 by hot pressing or the like to form the core 5, excess core film is removed, and an upper cladding layer 7 is provided through the agency of an upper adhesive layer 6 (Fig. 4(2)).

The substrate 2 provided with the amorphous fluororesin optical waveguide 41 is then immersed in an aluminum release solution, whereupon the vapor-deposited aluminum of the dummy layer 42 is removed, making it possible to peel off the rigid substrate 2 bonded to the dummy layer of the optical waveguide. In other words, the portion devoid of the substrate 2 can be provided with a flexible amorphous fluororesin optical waveguide 41.

In the process, the dummy layer is configured such that specially sized rigid portions 2a are left behind at prescribed positions (for example, at the two end positions) on the substrate 2 with the amorphous fluororesin optical waveguide 41, yielding a flexible optical waveguide 41 in which the specially sized rigid portions of the substrate 2a are disposed at the two ends, and the portion of the rigid substrate 2a corresponding to the central portion is removed (Fig. 4(3)). The portions of the rigid substrate 2a can adequately preserve the left and right positions of the optical waveguide at the two ends of the optical waveguide 41, and the system can be accurately positioned with minimum effort by sandwiching these portions of the substrate 2a in a connector, making the system easier to assemble. Disposing these portions of the substrate 2a slightly further inward from the two end portions of the optical waveguide 41 allows the portions of the optical waveguide at the two ends to be displaced with greater ease, making it possible to place the core in the exact center (that is, to position the core with greater accuracy) by maintaining the desired thickness accuracy of the optical waveguide and the molding accuracy of the connector without any relation to the dimensional error related to the thickness of a rigid portion such as that of a silicon wafer.

Another feature of the inventive amorphous fluororesin optical waveguide is that because the core and the cladding are formed from an amorphous fluororesin film, the optical waveguide can be optionally fashioned as a laminated optical waveguide obtained by stacking amorphous fluororesin layers. Specifically, the laminated optical waveguide can be formed by a method in which a second core 5a is formed on the surface of the upper cladding layer 7 constituting the optical waveguide of the above working example in the same manner as the core 5 formed on the aforementioned lower cladding layer 4, as shown in Fig. 5. The same amorphous fluororesin film as that used in the working example above is then placed as a laminated upper cladding layer 7a on the second core 5a via an interposed film-like upper adhesive layer (not shown), and the laminated upper cladding layer 7a and the upper cladding layer 7 are integrally bonded together. V-shaped cut surfaces having prescribed angles to allow optical signals to reach the core are then formed on the upper and lower surfaces of the laminated optical waveguide in order to ensure that the optical signals can be transmitted between the first core 5 and second core 5a of the laminated optical waveguide.

The laminated optical waveguide has cut surfaces 51 and 52, which make an angle of about 45 degrees with the longitudinal direction of the core, and an optical signal 100 incident on the first core 5 is reflected at 90 degrees by the cut surface 52, admitted into the second core 5a, reflected for a second time by the cut surface 51 of the second core 5a, and transmitted by the second core 5a. The laminated optical waveguide pertaining to the present invention can thus transmit light in the thickness direction as well.

The optical waveguide laminate of the present invention is composed of a resin, making it easier to form the light-reflecting cut surfaces.

It follows from the above description that because the optical waveguide and manufacturing method of the present invention involve the use of an amorphous fluororesin, it is possible to provide an optical waveguide that has excellent heat resistance, improved water resistance, low optical absorption loss and minimal wavelength dependence within the optical communications waveband, high peeling resistance, and adequate adhesive strength between the lower cladding layer on a substrate (such as a ceramic substrate or a silicon wafer) and the substrate itself, or between lower and upper cladding layers. The present invention also allows an adequate optical waveguide to be fabricated with high accuracy and improved reproducibility while facilitating production and preventing situations in which swelling or mixing is brought about by the application of an amorphous fluororesin solution in the manner observed in the past, the cladding layers develop cracks as a result of stress release, or the core shifts away from its designated formation position.

## Claims

1. An optical waveguide, comprising:
(a) a lower cladding layer having grooves formed therein;
(b) a core disposed within said grooves;
(c) an adhesive layer disposed over said lower cladding layer and said core; and
(d) an upper cladding layer disposed over said adhesive layer.

2. An optical waveguide as defined in claim 1 wherein said lower cladding layer, said core, said adhesive layer, and said upper cladding layer comprise an amorphous fluororesin.

3. An optical waveguide as defined in claim 2 wherein said lower cladding layer comprises Teflon AF-1600.

4. An optical waveguide as defined in claim 2 wherein said core comprises Cytop CTL-809S.

5. An optical waveguide as defined in claim 2 wherein said adhesive layer comprises Teflon AF-1600 and a perfluoropolyether fluorine oil.

6. An optical waveguide as defined in claim 2 wherein said upper cladding layer comprises Teflon AF-1600.

7. An optical waveguide as defined in claim 1 further comprising a substrate adjacent to said lower cladding with another adhesive layer disposed between said lower cladding layer and said substrate.

8. An optical waveguide as defined in claim 7 wherein said substrate comprises a silicon wafer.

9. An optical waveguide as defined in claim 7 wherein said another adhesive layer comprises Cytop CTL-809M.

10. An optical waveguide comprising:
(a) a silicon wafer substrate;
(b) a lower adhesive layer comprising amorphous fluororesin disposed over said substrate;
(c) a lower cladding layer comprising amorphous fluororesin and having grooves formed therein disposed over said lower adhesive layer;
(d) a core comprising amorphous fluororesin disposed in said grooves;
(e) an upper adhesive layer comprising amorphous fluororesin and a perfluoropolyether fluorine oil disposed over said core and said lower cladding layer; and
(f) an upper cladding layer comprising amorphous fluororesin disposed over said upper adhesive layer.

11. A method of making an optical waveguide comprising:
(a) providing a substrate;
(b) forming a lower adhesive layer over said substrate;
(c) forming a lower cladding layer over said lower adhesive layer;
(d) forming grooves in said lower cladding layer;
(e) forming a core in said grooves;
(f) forming an upper adhesive layer over said core and said lower cladding layer;
(g) forming an upper cladding layer over said upper adhesive layer.
